Europäisches Patentamt

European Patent Office

Office européen des brevets

(11) Publication number : **0 664 548 A2**

# (12) EUROPEAN PATENT APPLICATION

(21) Application number : 95300394.4

(22) Date of filing : 23.01.95

(51) Int. Cl.⁶ : **H01G 4/30, H01G 4/12**

(30) Priority : **22.01.94 GB 9401226**

(43) Date of publication of application :
**26.07.95 Bulletin 95/30**

(84) Designated Contracting States :
**DE FR GB NL**

(71) Applicant : **OXLEY DEVELOPMENTS CO., LTD.**
**Priory Park**
**Ulverston Cumbria LA12 9QG (GB)**

(72) Inventor : **Tavernor, Andrew William**
**88 Cherry Tree Road**
**Walton, Wakefield, WF2 6LL (GB)**

(74) Representative : **W.P. Thompson & Co.**
**Coopers Building,**
**Church Street**
**Liverpool L1 3AB (GB)**

(54) **Fabrication of capacitors and electrostrictive devices.**

(57) A method for fabricating a capacitor/electrostrictive device comprising stacking and co-firing a plurality of ceramic composition layers ($L_1$, $L_2$...$L_n$) between metallic electrodes (10), to form a monolithic ceramic block, the ceramic composition layers being selected so that the compositions are compatible for co-firing and also so that their differing, unstable temperature characteristics average out when the layers are connected in parallel within the monolithic ceramic block. The invention also covers a capacitor/electrostrictive device when formed by this method.

Figure 1

EP 0 664 548 A2

Jouve, 18, rue Saint-Denis, 75001 PARIS

The present invention relates to capacitor devices and electrostrictive devices of the type which are fabricated using co-fired layers of ceramic material to form the dielectric part(s) of the devices.

It is known to fabricate capacitors and electrostrictive devices using layers of a particular ceramic material which are co-fired with two or more spaced electrodes to build up the required capacitor structure.

A problem with this type of known structure is that a given ceramic material will have a particular capacitance/temperature characteristic which is unstable with the result that the resultant capacitance/temperature characteristic of the capacitor device as a whole is also unstable.

It is an object of the present invention to provide a fabrication technique which will result in capacitor devices with improved capacitance/temperature stability and electrostrictive devices with improved strain/temperature stability.

In accordance with the present invention, a capacitor/electrostrictive device is fabricated by stacking and co-firing a plurality of ceramic composition layers to form a monolithic ceramic block, the ceramic composition layers being selected so that the compositions are compatible for co-firing and also so that their differing (unstable) temperature characteristics average out when the layers are connected in parallel within the monolithic ceramic block.

Preferably, the various layers correspond to a specific general formula chosen to achieve the required co-firing and temperature characteristic averaging specified hereinbefore.

The invention is described further hereinafter, by way of example only, with reference to the accompanying drawings, in which:-

Fig. 1 is a diagrammatic sectional view through one embodiment of a multi-layer, multi-composition device in accordance with the present invention;

Figs. 2 and 2a illustrates how the use of a plurality of layers with different, unstable temperature characteristics can result in a device having a stable characteristic when connected in parallel; and

Fig. 3 illustrates the situation achieved using three different layers in a practical example.

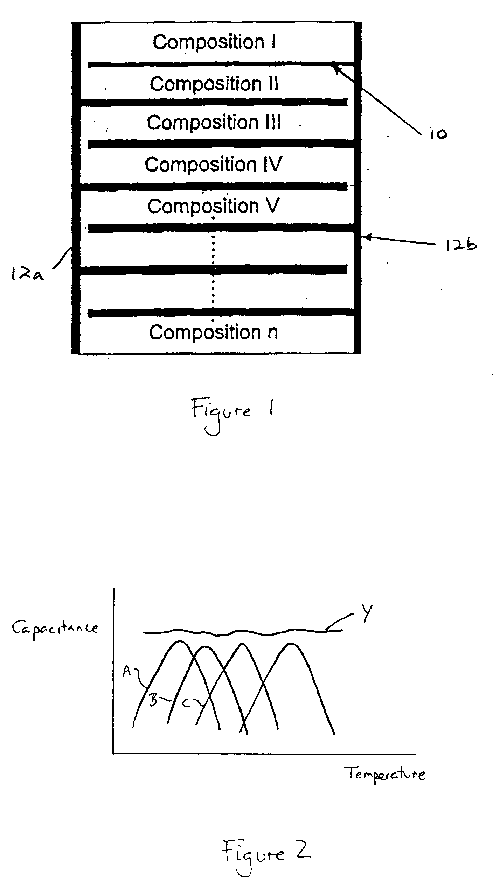

The capacitor device of Fig. 1 comprises a plurality of ceramic layers ($L_1, L_2, L_3 .... L_n$), eah of which (or at least some of which) is of a different composition, which are disposed in a stack together with a plurality of planar inner electrodes 10, alternate ones of which are connected to first and second end terminations 12a,12b, respectively. The stack of ceramic layers and electrodes are co-fired to produce a multi-composition, multi-layer monolithic ceramic block structure, referred to hereinafter as a MCMLS. The ceramic layers are preferably in the form of tape cast thick film layers of different electroceramic compositions.

The selection criteria used in establishing the composition of the various layers of the parallel structure are the ability for each (different) composition layer to survive and be compatible with its neighbour at the very high temperature involved in co-firing/sintering. When the material system described hereinafter and based on PMT/PT is used, a particular advantage is gained that the material has relatively low firing temperatures (700° - 1200°C) compared to the firing of conventional materials (typically 1400°C - 1600°C).

Using the latter materials, the atmosphere can be either air, inert or reducing. This allows a wider choice of electrodes than normal. The electrode material, eg. palladium, has also of course to be compatable with the PMN/PT system. Additionally, it is important that cross contamination between (different) layers does not occur during co-firing because this would degrade the electrical performance of the layer and thus its capacitance. This feature is assisted by the electrode which can itself act as a barrier layer to cross contamination.

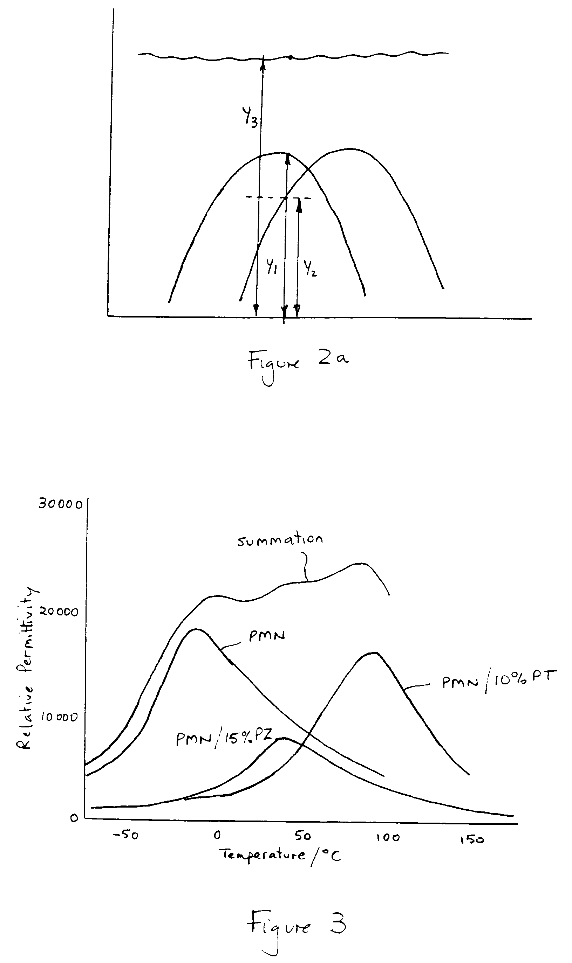

As shown in the diagrammatic curves of Fig. 2, each different layer has its own particular capacitance/temperature characteristic A,B,C, etc which, individually, is of an unstable form. However, when combined together as a result of the parallel structure resulting from the fabrication technique described hereinbefore, the resultant characteristic averages out to have the stable form indicated at Y.

This is illustrated further by Fig. 2a which shows the different temperature coefficient of capacitance (TCC) curves for just two different materials in the layered stack. The average is the summation of each curve at a given temperature ie. $Y_1 + Y_2 = Y_3$ at the temperature $t_1$ in Fig. 2a.

Novel powder processing techniques are employed to produce the chemically differing compositions having substantially the same sintering characteristics to enable co-firing of all the layers to form the device.

One preferred system is based on lead magnesium niobate (PMN) and lead titanate (PT) materials mixed in varying proportions according to the general formula:

$$1 - x\{Pb(Mg_{\frac{1}{3}}Nb_{\frac{2}{3}})O_3\} + x\{PbTiO_3\} \Rightarrow$$
$$Pb(Mg_{\frac{1-x}{3}}Nb_{\frac{2(1-x)}{3}}Ti_x)O_3$$

where $1\text{mol}\% < x < 35\text{mol}\%$.

## Example

A particular example based on this formula is illustrated in Fig. 3 wherein three layers have different compositions corresponding to the value x in the formula being 10% and 15%, ie:

Layer 1 = PMN
Layer 2 = PMN/10% PT

Layer 3 = PMN/15% PZ
(nb PZ is the same formula as given above but with Titanium (Ti) replaced by Zirconium (Zr) ).

The multilayer structure comprises three layers of equal thickness (typically 100 microns), or multiples of this triplet to achieve the capacitance required.

Fig. 3 shows the three different (unstable) curves corresponding to the individual PMN, PMN/10% PT and PMN/15% PZ and also the resulting (stable) summation.

A generic extension is to add varying quantities of lead-zirconate (PZ) to improve the high temperature stability and thus give an even wider operating regime.

The structures fabricated can be for use in both capacitative and electrostrictive applications (dependent on the materials used) to provide materials satisfying the various EIA (Electrical Industries of America) specification for Class II capacitors with exceptionally high volumetric efficiencies.

The use of lead based relaxor ferroelectric ceramics in some embodiments allows sintering of the structure at temperatures of <1000°C thus enabling the use of lower cost base metal electrodes.

The device may also be fabricated from other dielectric materials, where each layer is chosen for the temperature characteristics desired.

## Claims

1. A method for fabricating a capacitor/electrostrictive device comprising stacking and co-firing a plurality of ceramic composition layers ($L_1, L_2...L_n$) between metallic electrodes (10) to form a monolithic ceramic block, the ceramic composition layers being selected so that the compositions are compatible for co-firing and also so that their differing, unstable temperature characteristics average out when the layers are connected in parallel within the monolithic ceramic block.

2. A method as claimed in claim 1, wherein the various layers ($L_1, L_2...L_n$) correspond to a specific general formula chosen to achieve the required co-firing and temperature characteristic averaging specified hereinbefore.

3. A method as claimed in claim 2, wherein said general formula is:
$$1 - x\{Pb(Mg_{\frac{1}{3}}Nb_{\frac{2}{3}})O_3\} + x\{PbTiO_3\} \Rightarrow$$
$$Pb(Mg_{\frac{1-x}{3}}Nb_{\frac{2(1-x)}{3}}Ti_x)O_3$$
where 1mol% < x < 35mol%.

4. A method as claimed in claim 3, wherein one or more layers of the stack, Ti (titanium) in the formula is replaced by Zirconium.

5. A method as claimed in any of claims 1 to 3, wherein the ceramic compositions constituting said layers include lead zirconate (PZ).

6. A capacitor or electrostructive device which is fabricated by stacking and co-firing a plurality of ceramic composition layers ($L_1, L_2...L_n$) between metallic electrodes (10) to form a monolithic ceramic block, the ceramic composition layers having been selected so that the compositions are compatible for co-firing and also so that their differing (unstable) temperature characteristics average out when the layers are connected in parallel within the monolithic ceramic block.

7. A device as claimed in claim 6, wherein the various layers ($L_1, L_2....L_n$) correspond to a specific general formula chosen to achieve the required co-firing and temperature characteristic averaging specified hereinbefore.

8. A device as claimed in claim 7, wherein said general formula is:
$$1 - x\{Pb(Mg_{\frac{1}{3}}Nb_{\frac{2}{3}})O_3\} + x\{PbTiO_3\} \Rightarrow$$
$$Pb(Mg_{\frac{1-x}{3}}Nb_{\frac{2(1-x)}{3}}Ti_x)O_3$$
where 1mol% < x < 35mol%.

9. A device as claimed in claim 8, wherein one or more layers of the stack, Ti (titanium) in the formula is replaced by Zirconium.

10. A device as claimed in any of claims 6 to 8 wherein the ceramic compositions constituting said layers include lead zirconate (PZ).

| Composition I |
| Composition II |
| Composition III |
| Composition IV |
| Composition V |
| |
| |
| Composition n |

10

12a

12b

Figure 1

Capacitance

A
B C
Y

Temperature

Figure 2

Figure 2a

Figure 3